# EUROPÄISCHE PATENTANMELDUNG

(11) **EP 2 145 816 A2**
(43) Veröffentlichungstag der Anmeldung: **20.01.2010**
(21) Anmeldenummer: 09008022.7
(22) Anmeldetag: 19.06.2009
(51) Int. Cl.: B62J 11/00, B60R 11/02

(54) **Vorrichtung zur Aufnahme eines Navigationsgerätes an dem Lenker eines Zweirades**

(30) Priorität: 19.07.2008 DE 202008009709 U
(71) Anmelder: Hedri, Marouan, 34225 Baunatal (DE)
(72) Erfinder: Hedri, Marouan, 34225 Baunatal (DE)
(74) Vertreter: Walther, Walther & Hinz GbR

(57) **Zusammenfassung**

Gegenstand der Erfindung ist eine Vorrichtung (1) zur Aufnahme eines Navigationsgerätes an dem Lenker (5) eines Zweirades, insbesondere eines Motorrades, umfassend einen Schlitten (3) zur Aufnahme des Navigationsgerätes, der verschieblich auf einer am Lenker fixierbaren Halterung (2) angeordnet ist.

## Beschreibung

Die Erfindung betrifft eine Vorrichtung zur Aufnahme eines Navigationsgerätes an dem Lenker eines Zweirades, insbesondere eines Motorrades.

Es sind Navigationsgeräte insbesondere für Motorräder bekannt. Diese Navigationsgeräte zeichnen sich unter anderem dadurch aus, dass sie wasserdicht sind. Das Navigationsgerät wird lesbar an dem Lenker des Motorrades befestigt, wobei es zum Schutz vor Diebstahl beim Abstellen des Motorrades mit abgebaut werden muss.

Es ist allerdings auch bekannt, dass der Platz auf dem Lenker eines Motorrades durchaus begrenzt ist, da bereits eine Vielzahl von Aggregaten am Lenker befestigt sind, wie beispielsweise Bremsgriffe oder auch Schalter u.ä. Bei bestimmten Motorrädern ist es nun so, dass sich das Zündschloss unmittelbar am Lenker befindet. Insbesondere befindet sich bei manchen Motorrädern das Zündschloss am Lenker dort, wo der Lenker einen Freiraum lässt, wobei dies dann der einzige Platz ist, um das Navigationsgerät anzubringen. Wird dort allerdings das Navigationsgerät angebracht, so ist das Zündschloss nicht mehr zugänglich.

Die der Erfindung zugrunde liegende Aufgabe besteht demzufolge darin, eine Vorrichtung der eingangs genannten Art bereitzustellen, die an dem Lenker eines Motorrades, insbesondere auch im Bereich des Zündschlosses befestigt werden kann, ohne den Zugang zum Zündschloss zu erschweren oder gar unmöglich zu machen.

Die Aufgabe wird erfindungsgemäß dadurch gelöst, dass die Vorrichtung zur Aufnahme des Navigationsgerätes einen Schlitten zur Aufnahme des Navigationsgerätes umfasst, der verschieblich auf einer am Lenker fixierbaren Halterung angeordnet ist. Durch die verschiebliche Anordnung des Schlitten wird nun erreicht, dass der Schlitten lediglich zur Seite geschoben werden muss, um das Zündschloss zugänglich zu machen. Die Höhe der Halterung ist hierbei derart gewählt, dass bei aufgesetztem Zündschlüssel das Navigationsgerät den Zündschlüssel selbst nicht tangiert.

Vorteilhafte Merkmale und Ausgestaltungen der Erfindung ergeben sich aus den Unteransprüchen.

So ist insbesondere vorgesehen, dass der Schlitten in mindestens einer Stellung, insbesondere außermittig zur Halterung, auf der Halterung lösbar arretierbar ist. Hieraus wird deutlich, dass zum Betätigen des Zündschlosses der Schlitten verschoben wird, und in der Endstellung zunächst arretierbar ist. Ist das Motorrad nunmehr angelassen worden, besteht die Möglichkeit, den Schlitten wieder in seine Ausgangsstellung zu verfahren, das bedeutet, dass sich dann das Navigationsgerät genau mittig im Gesichtsfeld des Fahrers befindet. Im Einzelnen ist in diesem Zusammenhang vorgesehen, dass der Schlitten entgegen einer Federkraft in die Arretierstellung überführbar ist, was bedeutet, dass der Schlitten aufgrund der Kraft der Feder von allein wieder in seine Ausgangsstellung zurückgezogen wird. In dieser Ausgangsstellung ist eine Arretierung nicht erforderlich, da der Schlitten durch die Feder in dieser Stellung gehalten wird. Zur Fixierung des Schlittens ist im Einzelnen ein Nocken vorgesehen, der mit einem Arretierstift an der Halterung zusammenarbeitet, wobei der Arretierstift entgegen der Kraft einer Feder verschieblich ist. Das bedeutet, dass der Schlitten in verschobener Stellung zunächst durch den Arretierstift gehalten wird, wobei dann, nach Betätigung des Arretierstiftes, der Schlitten aufgrund der Federkraft wieder in seine Ausgangslage zurückfährt.

Der Schlitten, der einen Stecker zur Stromversorgung des Navigationssystems aufweist, weist mittig eine U-förmige Aussparung auf, die nach einem besonderen Merkmal der Erfindung dafür sorgt, dass der Zündschlüssel nicht in Kontakt mit der Halterung gelangt.

Wie bereits anderer Stelle erläutert, soll insbesondere auch die Halterung lösbar mit dem Lenker verbunden sein. In diesem Zusammenhang sind an der Halterung sogenannte Klettbandverschlüsse vorgesehen.

Anhand der Zeichnungen wird die Erfindung nachstehend beispielhaft näher erläutert.
- Fig. 1: zeigt die Vorrichtung in perspektivischer Darstellung;
- Fig. 2 a u. 2b: zeigen die Halterung in einer Draufsicht, sowohl in der Ausgangsstellung als auch in der verschobenen Stellung;
- Fig. 3a u. 3b: zeigen jeweils eine Schnittdarstellung gemäß den Fig. 2a, 2b;
- Fig. 4a - 4c: zeigen das Prinzip der Arretierung des Schlittens an der Halterung.

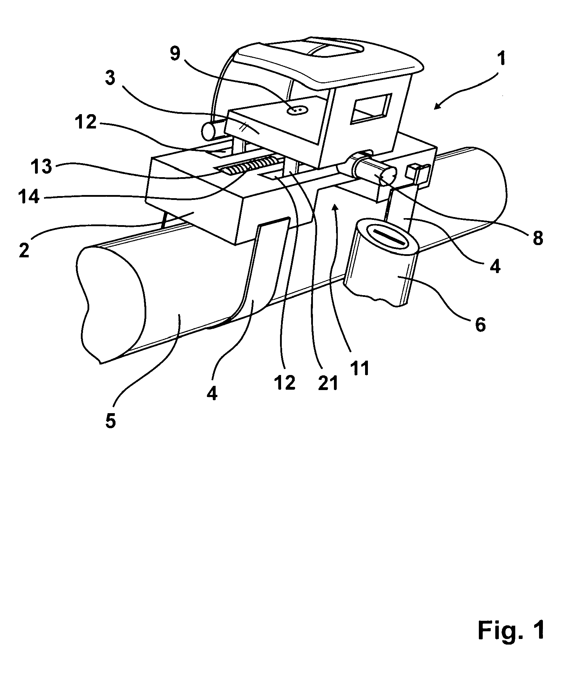

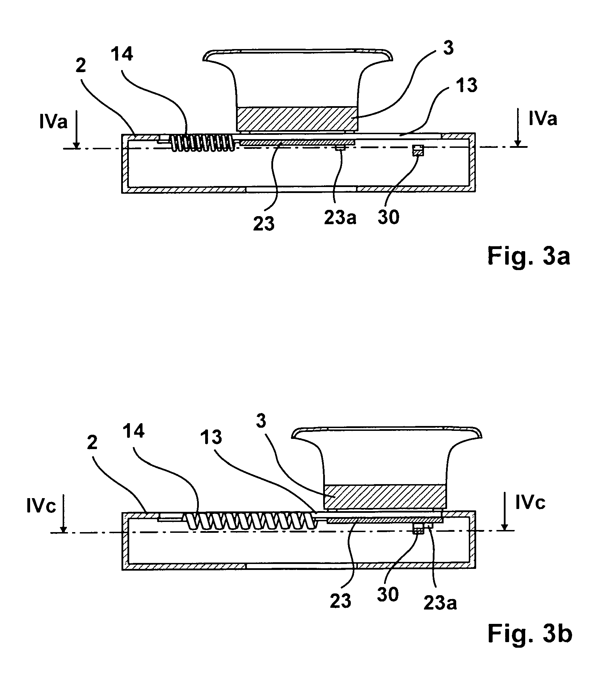

Gemäß der Fig. 1 zeigt die insgesamt mit 1 bezeichnete Vorrichtung eine Halterung 2, auf der der Schlitten 3 verschieblich angeordnet ist, wobei der Schlitten 3 das nicht dargestellte Navigationsgerät aufnimmt. Der Schlitten 3 ist ein handelsüblicher Adapter zum Aufclipsen des Navigationsgerätes, über den die Stromversorgung des Navigationsgerätes durch den Stecker 9 vorgenommen wird. Die Stromversorgung erfolgt schlussendlich durch ein Kabel, das mittig zu der Halterung abgeht und gegebenenfalls auch das Zündschloss verdeckt. Die Halterung 2 ist mittels Klettbandverschlüssen 4 am Lenker 5 lösbar befestigt. Das Zündschloss 6 ist schematisch dargestellt. Die Halterung 2 weist mittig eine U-förmige Aussparung 11 auf, die dafür sorgt, dass der im Zündschloss befindliche Schlüssel nicht in Kontakt mit der Halterung gelangt. Die Halterung zeigt darüber hinaus zwei Nuten, sowie eine Nut 13. Im Bereich der Nuten 12 besitzt der Schlitten Stege 21, durch die der Schlitten mit einer auf der Unterseite angeordneten Konterplatte 23 verschraubt ist, wie sich dies auch in Anschauung der Fig. 3a und 3b ergibt. In der mittleren Nut 13 befindet sich eine Feder 14, die mit dem Schlitten und hier insbesondere mit der Konterplatte 23 verbunden ist.

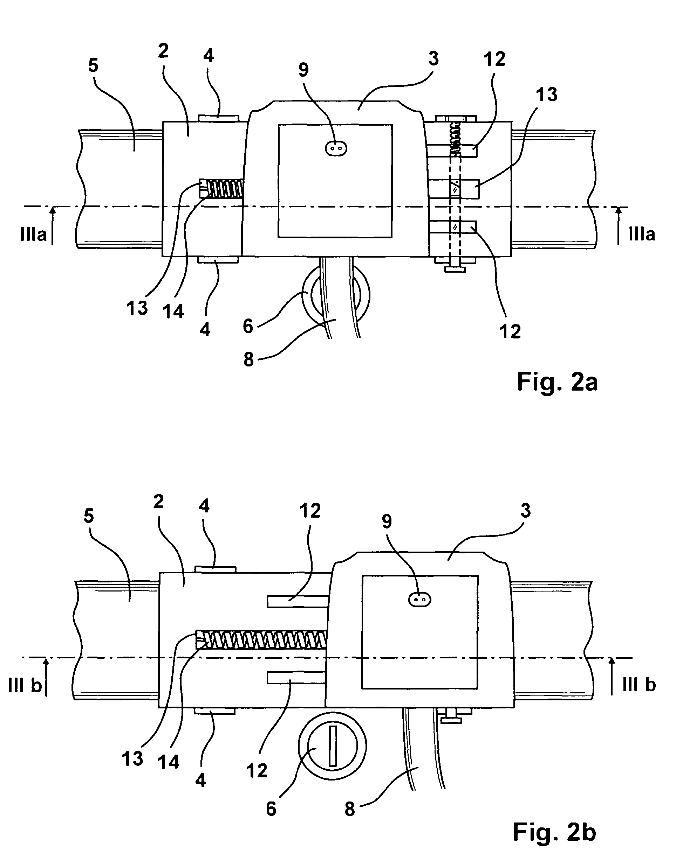

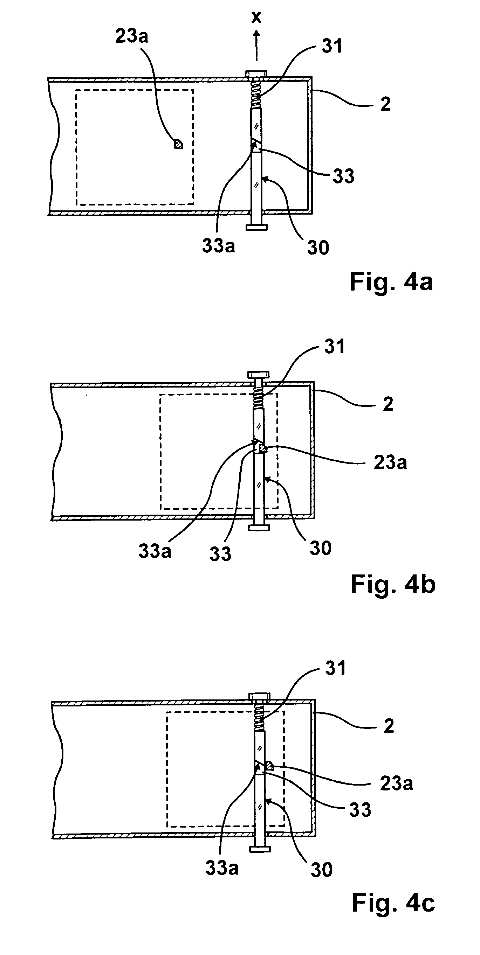

Die Fixierung des Schlittens in der außermittigen Stellung zu der Halterung gemäß den Fig. 2a, 2b ergibt sich im Einzelnen in Anschauung der Fig. 4a bis 4c. Die Halterung 2 umfasst den Arretierstift 30, der in Richtung des Pfeiles X entgegen der Kraft der Feder 31 verschieblich gelagert ist. Der Arretierstift 30 besitzt eine Nut 33 zur Zusammenarbeit mit einem Nocken 23a auf der Unterseite der Konterplatte 23. Wird der Schlitten in Richtung des Arretierstifts 30 verschoben, so gelangt der Nocken 23a in den Bereich der Nut 33 (Fig. 4b), wobei in diesem Fall der Arretierstift entgegen die Kraft der Feder 31 in Richtung des Pfeiles X verschoben wird. In dem Moment, wo der Nocken 23a den Arretierstift an der Aufbauschräge 33a der Nut 33 passiert hat, springt der Arretierstift wieder in seine Ausgangslage zurück (Fig. 4c). In diesem Zustand hat der Schlitten eine Stellung gemäß der Fig. 2b eingenommen. Durch Druck auf den Arretierstift 30 in Richtung Pfeil X wird der Nocken 23a freigegeben, mit der Folge, dass der Schlitten in seine Ausgangslage gemäß Fig. 2a zurückspringt.

## Patentansprüche

1. Vorrichtung (1) zur Aufnahme eines Navigationsgerätes an dem Lenker (5) eines Zweirades, insbesondere eines Motorrades, umfassend einen Schlitten (3) zur Aufnahme des Navigationsgerätes, der verschieblich auf einer am Lenker fixierbaren Halterung (2) angeordnet ist.

2. Vorrichtung nach Anspruch 1,
**dadurch gekennzeichnet,**
**dass** der Schlitten (3) in mindestens einer Stellung auf der Halterung (2) lösbar arretierbar ist.

3. Vorrichtung nach einem der voranstehenden Ansprüche,
**dadurch gekennzeichnet,**
**dass** der Schlitten (3) entgegen der Kraft einer Feder (14) in die Arretierstellung überführbar ist.

4. Vorrichtung nach einem der voranstehenden Ansprüche,
**dadurch gekennzeichnet,**
**dass** der Schlitten (3) einen Stecker (9) zur Stromversorgung des Navigationssystems aufweist.

5. Vorrichtung nach einem der voranstehenden Ansprüche,
**dadurch gekennzeichnet,**
**dass** die Halterung (2) mittig eine U-förmige Aussparung (11) aufweist.

6. Vorrichtung nach einem der voranstehenden Ansprüche,
**dadurch gekennzeichnet,**
**dass** zur abnehmbaren Fixierung der Halterung (2) am Lenker Klettbandverschlüsse (4) vorgesehen sind.

7. Vorrichtung nach einem der voranstehenden Ansprüche,
**dadurch gekennzeichnet,**
**dass** der Schlitten (3) einen Nocken (23a) aufweist, der mit einem Arretierstift (30) zusammenarbeitet.

8. Vorrichtung nach einem der voranstehenden Ansprüche,
**dadurch gekennzeichnet,**
**dass** der Arretierstift (30) entgegen der Kraft einer Feder (31) verschieblich ist.
